# EUROPEAN PATENT SPECIFICATION

(11) **EP 1 288 040 B1**
(45) Date of publication and mention of the grant of the patent: **09.01.2008**
(21) Application number: 02015899.4
(22) Date of filing: 17.07.2002
(51) Int. Cl.: B60J 5/06, E05F 15/12, E05D 15/28

(54) **Roto-translating door for motor vehicles**
Schwenktüre für Kraftfahrzeuge
Porte pivotable pour véhicule à moteur

(30) Priority: 31.07.2001 IT TO20010758
(43) Date of publication of application: 05.03.2003
(73) Proprietor: O.C.L.A.P. S.R.L., 10060 Piscina (TO) (IT)
(72) Inventor: Losito, Pietro, 10060 Frossasco (TO) (IT)
(74) Representative: Robba, Pierpaolo

(56) References cited:
- BE-A- 751 720
- BE-A- 1 003 725
- DE-A- 4 218 006
- ES-A- 2 070 706
- PATENT ABSTRACTS OF JAPAN vol. 1999, no. 13, 30 November 1999 (1999-11-30) & JP 11 222036 A (TOYOTA AUTO BODY CO LTD), 17 August 1999 (1999-08-17)

## Description

The present invention relates to a roto-translating door for vehicles according to the preamble of claim 1. A door of this kind is known from ES 2 070 706 A.

More particularly, the invention relates to an automatic roto-translating door for motor vehicles, such as vans and small buses.

Small vehicles, contrary to big coaches, normally are equipped with manually actuated sliding side doors, mounted on suitable tracks.

Roto-translating doors, equipped with a wing hingedly connected to a pair of semicircular arms rotating about a vertical axis operated by a motor-driven system, are on the contrary used on bigger vehicles, since they are more cumbersome, more complex to install and hence more expensive.

Moreover, suitable structural modifications to the body are to be foreseen, already in the design phase, for the vehicles onto which such doors are mounted, in order to house the electromechanical moving and actuating mechanisms and, above all, to stiffen and strengthen the body portion around the door.

The mounting and the proper operation of the door actually require very narrow tolerances and high precision for all mechanical parts and body parts. Moreover, in order to ensure a perfect closing and tightness of the wing, the body must not undergo deformations.

Especially that last aspect makes application of such door onto small vehicles difficult: indeed, such vehicles have a lighter, and hence less rigid body and, of course, less available space for the actuating mechanisms.

Thus, the present invention aims at solving the problem of how to obtain a roto-translating door that can be applied to any kind of vehicle, independently of the size or the structural characteristics.

The above and other objects are achieved by the roto-translating door system as claimed in the appended claims.

Advantageously, according to the invention, an integral system is provided that includes a rigid frame, a wing and an electromechanical actuating system.

Thus, the integral system is self-bearing and independent of the kind of vehicle onto which it will be installed.

Advantageously, the system made in accordance with the invention can be completely assembled and tested before being installed on the vehicle and, in case of failures or malfunctioning, it can be wholly replaced or removed for an easier and faster repair.

The above and other objects of the invention will become more apparent from the following exemplary description of a preferred embodiment, with reference to the accompanying drawings, in which:
- Fig. 1 is a perspective view of an integral roto-translating door system manufactured in accordance with the invention;
- Fig. 2 is a rear view of the integral system shown in Fig. 1;
- Fig. 3 is a side view of the integral system shown in Fig. 1;
- Fig. 4 is a side view, partly in cross-section, of a tilting step embodied into the integral system shown in Fig. 1;
- Fig. 5 is a top view of part of the tilting step shown in Fig. 4;
- Fig. 6 is a perspective view of a helical cam used in the movement of the tilting step shown in Fig. 4; and
- Fig. 7 is a sectional view of a frame and a wing of the integral system shown in Fig. 1.

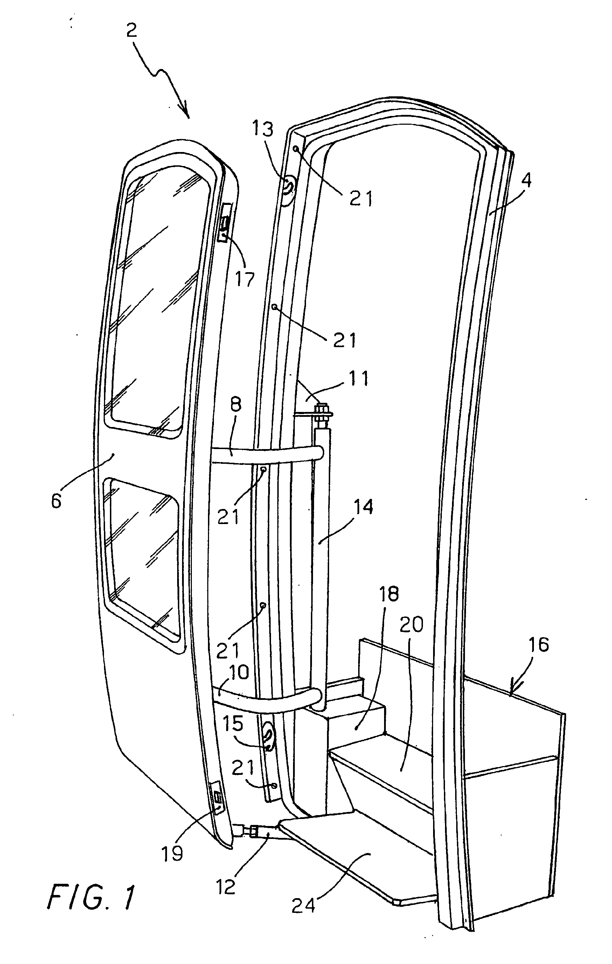

Referring to Figs. 1 to 3, a roto-translating door 2 for a vehicle side wall, not shown in the drawing, comprises a bearing frame 4, a wing 6 and the whole of the electro-mechanical equipment required for moving wing 6 with respect to frame 4.

Bearing frame 4 forms a ledge surface for wing 6, since its shape substantially corresponds with the external perimeter of wing 6. Moreover the frame carries arms 8, 10, 12 supporting wing 6, a rotating electromechanical assembly 18 for moving the arms, and a group of steps 16 comprising a moving step 24.

Bearing frame 4, made by metal box elements, has multiple holes 21, arranged along its perimeter, allowing its fastening to the body of a motor vehicle, e.g. a van or a small bus.

Thus, by using only a limited number of screws or bolts, it is possible to easily and quickly install door 2 onto a vehicle body, and, if required, to remove the door with the same ease.

Moving wing 6 is pivotally mounted onto a pair of curved arms 8, 10, secured to a vertical bar 14 rotating about its axis, and it is also connected to a third, extensible small arm 12. Arm 12 is to keep wing 6 in the proper position relative to the vehicle body, during opening and closing movements, and to impart a linear movement to the wing during the last phase of wing motion, so as to ensure the wing closing.

Vertical bar 14 is supported at its lower end by said electromechanical rotating assembly 18, which actually controls the rotation thereof, and at its upper end by a bearing bracket 11 welded to one vertical jamb of frame 4.

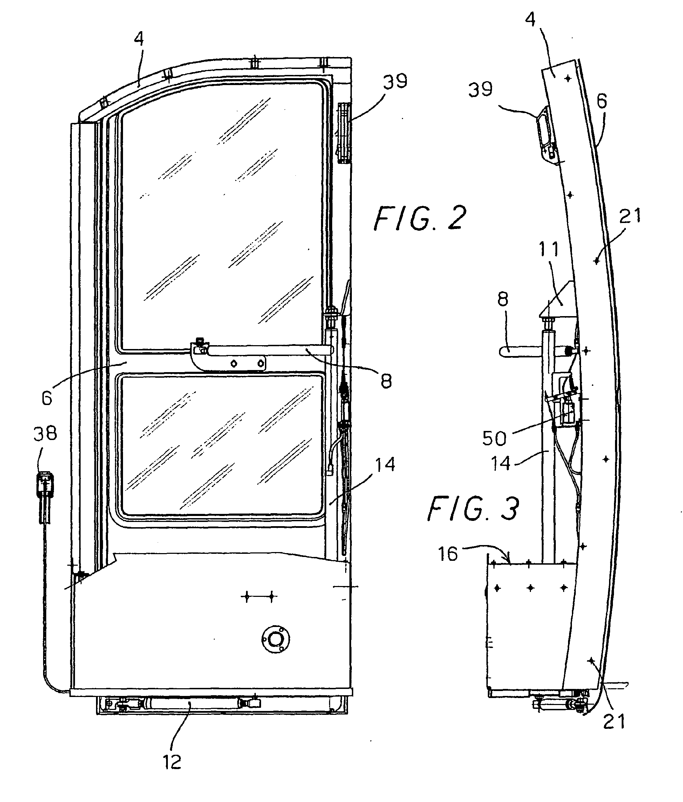

Closing of wing 6, when it is brought against the frame, is ensured by a pair of mechanical locks 13, 15 controlled by an electromagnet 50 through suitable tie-rods, and, on the opposite wing side, by a pair of projecting members 17, 19, arranged to enter corresponding recesses formed in frame 4. For safety reasons, opening of locks 13, 15 is moreover controlled by two safety handles, of which one, denoted 39, is located inside the vehicle and the other one, denoted 38, is located outside the vehicle (Figure 2).

A group of steps 16, including a stationary step 20 and a moving step 24, is located in the lower portion of bearing frame 4 and projects towards the inside of the vehicle. .

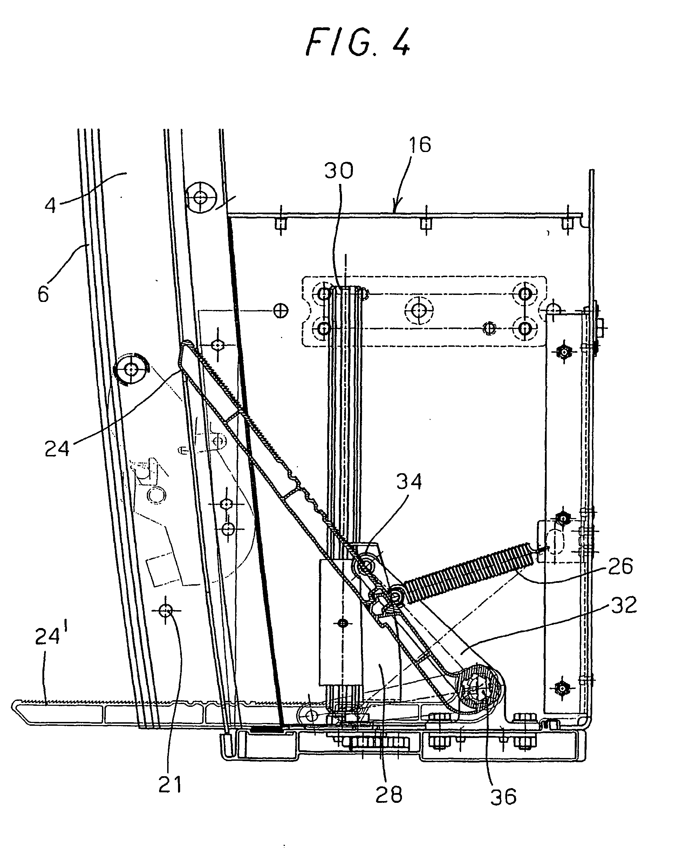

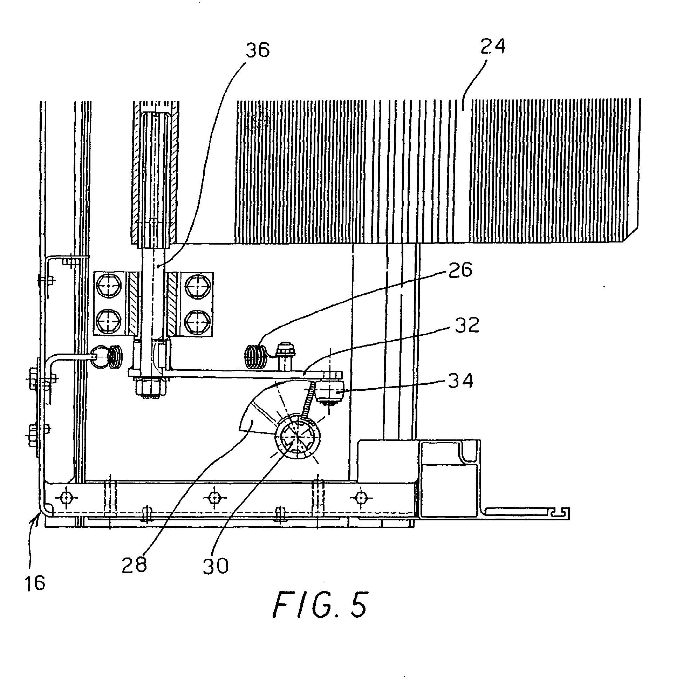

The structure and the operation of moving step 24 are shown in detail in Figs. 4 to 6. Step 24, of rectangular shape, is hinged along one side onto a rotation axis 36, which is coupled at one end to a rod 32 actuated by a helical cam 28.

The rotation of cam 28 about its axis 39 takes place in synchronism with the rotation of vertical bar 14. More particularly, when wing 6 is being opened, cam 28 lowers rod 32, and hence moving step 24, whereas, when wing 6 is closed again, a return spring 26 brings again step 24 to its idle position, by following the return stroke of helical cam 28. Advantageously, while wing 6 is being closed, the force required to lift step 24 is supplied by spring 26, and not by cam 28. In this manner, an excess overload of the motor in the electromechanical rotating assembly 18 actuating the door is avoided. During the lifting stroke of the step, cam 28 only limits the step movement, whereby a smooth movement is achieved in any condition.

Rod 32 is equipped, at the point of contact with cam 28, with a small idle wheel 34 of plastic material, which makes the contact between both parts more fluid.

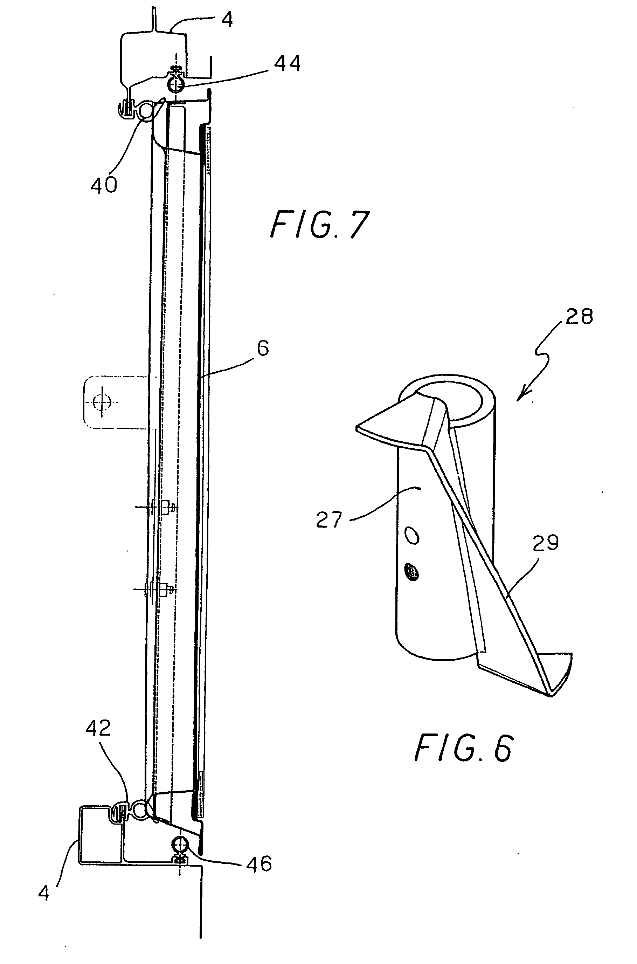

Fig. 6 shows in detail cam 28, comprising a central tubular portion 27, which is mounted and secured onto rotation axis 30, and a helical portion 29 that remains in contact with wheel 34 of rod 32 of moving step 24.

To ensure a high degree of safety, door 2 is moreover provided with two safety levels.

A first level includes a pair of pressure responsive sensing edges 44, 46, located on the internal sides of the two jambs of bearing frame 4. Such edges can be seen in detail in Fig. 7, which is a cross-sectional view of frame 4 and wing 6 in closed position.

Sensing edges 44, 46, directed towards the inside of the doorway, are separated from sealing gaskets 40, 42 of the door and are located in the outermost frame portion, so as to more easily detect the presence of small objects, such as the fingers of a hand.

Indeed, if a sensing edge is compressed while wing 6 is being closed, an inhibit signal for the door closing mechanism is generated, so that said mechanism is immediately stopped and causes the door to open again, while simultaneously releasing also the locks, should they have been actuated for closing.

The second safety level employs an amperometric control on the motor. If an obstacle hinders the wing movement during either closing or opening, and such obstacle generates an effort on the wing exceeding an upper threshold (e.g. 150 N), the door control equipment reverses the door movement.

All electromechanical, electrical and electronic door parts, such as motors, electromagnets, detectors and locks are controlled by an electronic control unit, not shown in the drawings, located for instance inside step group 16.

All parts necessary to the operation of door 2 are therefore included into the block formed by the frame, which includes the electromechanical rotating assembly 18 and the step group 16, and by wing 6.

The integral unit formed by door 2 can therefore be assembled and tested before being installed on the vehicle, with substantial advantages in terms of quality, ease of mounting and overall manufacturing and installation costs.

## Claims

1. A rotatable and slidable door (2) for a side wall of a vehicle, the door comprising a moving wing (6) pivotally mounted onto a pair of curved arms (8, 10) secured to a vertical bar (14) rotatable about its axis, said wing (6) being further connected to a third arm (12) arranged to keep said wing (6) parallel with said wall during opening and closing movements, **characterised in that** the door comprises a bearing frame (4), having a shape corresponding to the external perimeter of said wing (6) and forming a ledge surface for said wing (6), said bearing frame (4) being equipped, at a vertical jamb, with support means (11) for said vertical bar (14), and, at its lower part, with an electromechanical rotating assembly (18) for said vertical bar (14), said bearing frame (4) being further equipped with means (21) for securing the frame to said vehicle side wall.

2. A rotating and sliding door (2) as claimed in claim 1, wherein said means (21) for securing the bearing frame (4) to said vehicle side wall comprise a plurality of holes formed on the peripheral portions of the frame, for receiving corresponding screws arranged to engage the vehicle wall.

3. A rotating and sliding door (2) as claimed in claim 1, wherein said bearing frame (4) comprises, in its lower portion, a group of steps (16) projecting towards the inside of the vehicle and comprising at least one moving step (24), which is hinged along one of its sides and is capable of tilting towards the outside of the vehicle when said wing (6) is in open position.

4. A rotating and sliding door (2) as claimed in claim 3, wherein said moving step (24) rotates about a horizontal axis (36) the movement of which is coupled, through a rod (32) and a cam (28), to the rotational movement of said vertical bar (14).

5. A rotating and sliding door (2) as claimed in claim 4, wherein said cam (28) is a helical cam with vertical rotation axis (30), the rotation of the cam being synchronised with the rotation of said vertical bar (14), the cam pushing downwards the rod (32) coupled with the rotation axis (36) of the step (24) while the wing is being opened, thereby causing the step (24) to move downwards.

6. A rotating and sliding door (2) as claimed in claim 5, wherein the moving step (24) is equipped with a return spring (26) which raises the step when the helical cam (28) rotates in opposite direction while the wing (6) is being closed, thereby allowing said rod (32) to be lifted.

7. A rotating and sliding door (2) as claimed in claim 1, and further comprising, on the internal sides of the jambs of the bearing frame (4), a pair of sensing edges (44, 46) directed towards the inside of the doorway, so as to detect the presence of a foreign body, if any, between the bearing frame (4) and the wing (6), during the closing movement of the wing, and to allow stopping such movement.

## Patentansprüche

1. Eine drehbare und verschiebliche Tür (2) für die Seitenwand eines Fahrzeugs umfasst einen beweglichen Flügel (6), der schwenkbar an einem Paar gekrümmter Arme (8, 10) montiert ist, die an einer um ihre Achse drehbaren vertikalen Stange (14) befestigt sind, wobei der Flügel (6) obendrein mit einem dritten Arm (12) verbunden ist, der dazu ausgebildet ist, den Flügel (6) während der Öffnungs- und Schließbewegungen parallel zur Wand zu halten,
**dadurch gekennzeichnet, dass** die Tür einen Tragrahmen (4) aufweist, der eine dem äußeren Umfang des Flügels (6) entsprechende Form hat und ein Einfassungsprofil für den Flügel (6) bildet, wobei der Tragrahmen (4) an einem vertikalen Pfosten mit einem Lagerbock (11) für die vertikale Stange (14) ausgestattet ist und an seinem unteren Ende mit einer elektromechanischen Dreheinheit (18) für die vertikale Stange (14), wobei der Tragrahmen (4) weiter mit Elementen (21) zur Befestigung des Rahmens an der Fahrzeugseitenwand ausgerüstet ist.

2. Eine drehbare und verschiebliche Tür (2) nach Anspruch 1,
wobei die Elemente (21) zur Befestigung des Tragrahmens (4) an der Fahrzeugseitenwand eine Vielzahl von an den Umfangsbereichen des Rahmens ausgebildeten Löchern zur Aufnahme entsprechender Schrauben, umfasst, die zum Eingriff in die Fahrzeugwand angeordnet sind.

3. Eine drehbare und verschiebliche Tür (2) nach Anspruch 1,
wobei der Tragrahmen (4) in seinem unteren Bereich eine Reihe von Stufen (16) aufweist, die sich in Richtung des Fahrzeuginneren erstrecken sowie mindestens eine bewegliche Stufe (24) , die längs einer ihrer Seiten angelenkt und geeignet ist, vom Fahrzeug nach außen zu schwenken, wenn der Flügel (6) sich in der Öffnungsposition befindet.

4. Eine drehbare und verschiebliche Tür (2) nach Anspruch 3,
wobei die bewegliche Stufe (24) um eine horizontale Achse (36) dreht, deren Bewegung durch eine Treibstange (32) und einen Nocken (28) mit der Drehbewegung der vertikalen Stange (14) gekuppelt ist.

5. Eine drehbare und verschiebliche Tür (2) nach Anspruch 4,
wobei der Nocken (28) ein Schraubnocken mit vertikaler Drehachse (30) ist und die Drehung des Nockens mit der Drehung der vertikalen Stange (14) synchronisiert ist und der Nocken die mit der Drehachse (36) der Stufe (24) gekuppelte Treibstange (32) während des Öffnens des Flügels nach unten drückt und dabei bewirkt, dass die Stufe (24) sich nach unten bewegt.

6. Eine drehbare und verschiebliche Tür (2) nach Anspruch 5,
wobei die bewegliche Stufe (24) mit einer Rückholfeder (26) ausgerüstet ist, die die Stufe anhebt, wenn sich der Schraubnocken (28) in der Gegenrichtung dreht, während der Flügel (6) geschlossen wird und es dabei ermöglicht, dass die Treibstange (32) angehoben wird.

7. Eine drehbare und verschiebliche Tür (2) nach Anspruch 1,
die darüber hinaus an den Innenseiten der Pfosten des Tragrahmens (4) ein gegen das Innere der Türöffnung gerichtetes Paar von Profilsensoren (44, 46) aufweist, um das Vorhandensein eines Fremdkörpers, soweit vorhanden, zwischen dem Tragrahmen (4) und dem Flügel (6) während der Schließbewegung des Flügels zu erkennen und den Stopp dieser Bewegung zu erlauben.

## Revendications

1. Porte pouvant tourner et coulisser (2) destinée à une paroi latérale d'un véhicule, la porte comportant une aile mobile (6) montée à pivotement sur une paire de bras courbes (8, 10) fixés à une barre verticale (14) pouvant tourner autour de son axe, ledit vantail (6) étant, de plus, raccordée à un troisième bras (12) agencé en vue de maintenir ledit vantail (6) parallèle à ladite paroi pendant des mouvements d'ouverture et de fermeture, **caractérisée en ce que** la porte comprend une structure de support (4), présentant une configuration correspondant au périmètre externe dudit vantail (6) et formant une surface de pièce d'appui pour ledit vantail (6), ladite structure de support (4) étant équipée, au niveau d'un jambage vertical, de moyens de support (11) destinés à ladite barre verticale (14), et, au niveau de sa partie inférieure, d'un ensemble de rotation électromécanique (18) destiné à ladite barre verticale (14), ladite structure de support (4) étant dotée, de plus, de moyens (21) servant à fixer la structure à ladite paroi latérale de véhicule.

2. Porte tournante et coulissante (2) selon la revendication 1, dans laquelle lesdits moyens (21) servant à fixer la structure de support (4) à ladite paroi latérale de véhicule comportent une pluralité de trous formés sur les parties périphériques de la structure, destinés à recevoir des vis correspondantes disposées afin de s'engager avec la paroi du véhicule.

3. Porte tournante et coulissante (2) selon la revendication 1, dans laquelle ladite structure de support (4) comporte, dans sa partie inférieure, un groupe de marches (16) faisant saillie vers l'intérieur du véhicule et comportant au moins une marche mobile (24), laquelle est articulée le long de l'un de ses côtés et est capable de pivoter vers l'extérieur du véhicule lorsque ledit vantail (6) se trouve dans une position d'ouverture.

4. Porte tournante et coulissante (2) selon la revendication 3, dans laquelle ladite marche mobile (24) tourne autour d'un axe horizontal (36) dont le déplacement est couplé, par l'intermédiaire d'une tige (32) et d'une came (28), au mouvement de rotation de ladite barre verticale (14).

5. Porte tournante et coulissante (2) selon la revendication 4, dans laquelle ladite came (28) est une came hélicoïdale dotée d'un axe de rotation vertical (30), la rotation de la came étant synchronisée avec la rotation de ladite barre verticale (14), la came poussant vers le bas la tige (32) couplée à l'axe de rotation (36) de la marche (24) lorsque le vantail est en train de s'ouvrir, entraînant de ce fait, la marche (24) à se déplacer vers le bas.

6. Porte tournante et coulissante (2) selon la revendication 5, dans laquelle la marche mobile (24) est pourvue d'un ressort de rappel (26) qui relève la marche lorsque la came hélicoïdale (28) tourne dans une direction opposée alors que le vantail (6) est en train de se fermer, permettant de ce fait à ladite tige (32) d'être relevée.

7. Porte tournante et coulissante (2) selon la revendication 1, et comportant, de plus, sur les côtés intérieurs des jambages de la structure de support (4), une paire de bordures de détection (44, 46) dirigées vers l'intérieur de l'encadrement de la porte, de façon à détecter la présence d'un corps étranger, s'il en existe, entre la structure de support (4) et le vantail (6), pendant le mouvement de fermeture du vantail, et pour permettre l'arrêt de ce mouvement.
